# EUROPÄISCHE PATENTSCHRIFT

(11) **EP 3 250 408 B1**
(45) Veröffentlichungstag und Bekanntmachung des Hinweises auf die Patenterteilung: **23.09.2020**
(21) Anmeldenummer: 16703910.6
(22) Anmeldetag: 26.01.2016
(51) Int. Cl.: B60K 11/04, B60K 11/08

(54) **FRONTMODUL FÜR EINEN PERSONENKRAFTWAGEN**
FRONT MODULE FOR A PASSENGER CAR
MODULE AVANT POUR UNE VOITURE PARTICULIÈRE

(30) Priorität: 27.01.2015 DE 102015000922
(43) Veröffentlichungstag der Anmeldung: 06.12.2017
(73) Patentinhaber: Daimler AG, 70372 Stuttgart (DE)
(72) Erfinder: TROST, Maik, 72622 Nürtingen (DE); WOLF, Volkmar, 71155 Altdorf (DE); ZIPPERLE, Siegfried, 71134 Aidlingen (DE)
(74) Vertreter: Moore, David Simon
(86) Internationale Anmeldenummer: PCT/EP2016/000124
(87) Internationale Veröffentlichungsnummer: WO 2016/120011

(56) Entgegenhaltungen:
- EP-A2- 1 266 818
- DE-A1-102011 103 475
- DE-A1-102011 119 542

## Beschreibung

Die Erfindung betrifft ein Frontmodul für einen Personenkraftwagen, gemäß Oberbegriff des Anspruchs 1.

Bei bekannten Frontmodulen für Personenkraftwagen kommen bereits Adapterelemente zum Einsatz, unter deren Vermittlung ein Verkleidungsteil des Frontmoduls, insbesondere ein Kühlergrill, an einer dahinterliegenden Frontmodulstruktur befestigt ist. Die Frontmodulstruktur ist dabei ihrerseits rohbauseitig an Längsträgern einer oberen Längsträgerebene befestigt und umfasst beispielsweise eine sogenannte Kühlerbrücke, über welche die beiden Längsträger der oberen Längsträgerebene miteinander verbunden sind. Das Adapterelement dient dabei zur Aufnahme und Abstützung von Gebrauchslasten, welche auf das Verkleidungsteil beziehungsweise auf den Stoßfänger als Teil des Frontmoduls beispielsweise im Falle einer Frontalkollision mit einem Fußgänger wirken. Das Adapterelement schafft dabei eine einfache Möglichkeit der Anpassung des Frontmoduls an unterschiedliche Fahrzeugbaureihen beispielsweise einer Fahrzeugfamilie.

Allerdings ist hierbei ein hinreichender Deformationsraum erforderlich, in welchen das Verkleidungsteil beziehungsweise der Stoßfänger als Teil des Frontmoduls bei einem Fußgängeranprall ausweichen können. Gleichzeitig ist dieser Deformationsraum aber sehr knapp, da auch andere Einrichtungen im Bereich des Kraftwagenbugs untergebracht werden müssen.

Aus der EP 1 266 818 A2 geht ein gattungsgemäßes Frontmodul für einen Personenkraftwagen hervor

Aufgabe der vorliegenden Erfindung ist es, ein Frontmodul der eingangs genannten Art zu schaffen, welches sich in einfacher Weise an unterschiedliche Fahrzeugbaureihen anpassen lässt.

Diese Aufgabe wird erfindungsgemäß durch ein Frontmodul mit den Merkmalen des Anspruchs 1 gelöst. Vorteilhafte Ausgestaltungen mit zweckmäßigen Weiterbildungen der Erfindung sind in den übrigen Ansprüchen angegeben. Das Frontmodul zeichnet sich dadurch aus, dass das dem Adapterelement zugeordnete Stützelement U-förmig ausgebildet ist mit einem in Fahrzeugquerrichtung verlaufenden unteren Schenkel und jeweiligen seitlichen Schenkeln, wobei das Stützelement mit dem unteren Schenkel oberseitig des Biegequerträgers einer Stoßfängeranordnung an diesem abstützt ist und wobei das Adapterelement über die seitlichen Schenkel somit nach unten hin auch am Biegequerträger abgestützt ist, und dass in das Adapterelement eine verstellbare Abdeckeinrichtung einer Kühlöffnung einer Kühleinrichtung des Personenkraftwagens integriert ist.

Die Abdeckeinrichtung dient dabei zum Öffnen beziehungsweise zumindest teilweisen Verschließen der Kühlöffnung, über welche eine durch den Fahrtwind erzeugte Kühlluftströmung zur Kühleinrichtung gelangen und durch diese hindurch strömen kann. Die Kühleinrichtung kann beispielsweise wenigstens einen Wärmetauscher oder dergleichen umfassen, mittels welchem einem flüssigen oder gasförmigen Kühlmedium Wärme entzogen werden kann. Dabei kann es sich beispielsweise und insbesondere um Kühlwasser für einen Motor, aber auch für einen Ölkühler oder dergleichen, handeln. In der Schließstellung der Abdeckeinrichtung ist zumindest ein Teilbereich der Kühleinrichtung in Fahrzeuglängsrichtung nach vorne durch die Abdeckeinrichtung überdeckt, so dass zumindest ein Teilbereich der Kühleinrichtung bei einer Vorwärtsfahrt des Personenkraftwagens nicht von Fahrtwind angeströmt beziehungsweise umströmt werden kann. Hierdurch kann eine vorteilhafte Aerodynamik des Personenkraftwagens realisiert werden, so dass dessen Energieverbrauch sinkt.

Unter der erfindungsgemäßen Integration der Abdeckeinrichtung in das Adapterelement ist dabei zu verstehen, dass das Adapterelement entsprechende Funktionen für die Abdeckeinrichtung erfüllt. Insbesondere bedeutet dies, dass beispielsweise Abdeckelemente der Abdeckeinrichtungen am Adapterelement verstellbar gelagert sind. Dem Adapterelement kommt somit eine Doppelfunktion zu, da das Adapterelement zum einen zum Abstützen, insbesondere Befestigen, des Verkleidungsteils am Frontmodul dient. Zum anderen dient das Adapterelement zur Integration der Abdeckeinrichtung.

Durch diese Integration der Abdeckeinrichtung in das Adapterelement kann ein besonders großer, freier Deformationsraum im Frontbereich des Personenkraftwagens geschaffen werden, so dass sich ein besonders vorteilhafter Fußgängerschutz insbesondere im Lastfall eines Beinanpralls realisieren lässt. Dies bedeutet, dass bei einer etwaigen Kollision des Personenkraftwagens mit einem Fußgänger insbesondere im Bereich von dessen Beinen das entsprechende Verkleidungsteil besonders gut und hinreichend weit ausweichen kann, da in Folge der Integration der Abdeckeinrichtung in das Adapterelement ein besonders großer freier Deformationsraum zur Absorption von Unfallenergie zur Verfügung steht.

Um einen großen freien Deformationsraum zu schaffen, hat es sich als vorteilhaft gezeigt, wenn die Abdeckeinrichtung in Einbaulage des Adapterelements schräg zur Vertikalen, und zwar insbesondere von vorne unten nach hinten oben, verläuft. Durch diesen Verlauf kann ein besonders vorteilhafter Fußgängerschutz realisiert werden, da der Fußgänger bei einer Kollision mit dem Personenkraftwagen beispielsweise nicht gegen übermäßig steife Komponenten des Personenkraftwagens prallt.

In weiterer Ausgestaltung der Erfindung ist vorgesehen, dass sich die Abdeckeinrichtung unterseitig am Stützelement des Adapterelements abstützt, an dem sich dabei auch das Adapterelement abstützt. Im Ergebnis wird somit eine einfache Lagerung der jeweiligen Abdeckelemente der Abdeckeinrichtung möglich.

Eine weitere vorteilhafte Ausführungsform der Erfindung sieht vor, dass die Abdeckeinrichtung eine Mehrzahl von parallel zueinander, vorzugsweise in Fahrzeughochrichtung verlaufenden Abdeckelementen, insbesondere Lamellen, aufweist, welche an entgegengesetzten Seiten an entsprechenden Lagerungen gelagert sind. Hierdurch ergibt sich auf einfache Weise die verstellbare Abdeckeinrichtung, um hierdurch den die Kühleinrichtung durchströmenden Luftstrom einstellen zu können. Durch die vertikalen Lamellen kann die Abdeckeinrichtung der Kontur des Biegeträgers beziehungsweise des Adapters folgen. Damit können in Querrichtung an jeder Position nahezu gleiche Bauraumverhältnisse geschaffen werden.

Durch die Integration der Abdeckeinrichtung in das Adapterelement profitiert die Abdeckeinrichtung von der Steifigkeit des Adapterelementes und kann entsprechend bauraumoptimal gestaltet werden. Durch die Anbindung der Abdeckeinrichtung über einzelne Befestigungspunkte am Adapterelement können diese im Lastfall Fußgängerschutz versagend ausgeführt werden und zur Rückverschiebung der Abdeckeinrichtung führen. Vorteilhaft für den Fußgängerschutz ist, dass damit die Anbindungssteifigkeit gezielt an den Anbindungspunkten definiert und abgestimmt werden kann. Vorteilhaft ist in diesem Fall ebenfalls, dass die Steifigkeitsanforderungen von Adapterelement und Abdeckeinrichtung unabhängig voneinander definiert werden können. Dieser Ansatz trifft auch für Fahrzeuge zu bei denen kein Adapterelement eingesetzt wird. Die Funktion des Adapterelementes wird hier teilweise durch die Kühlerbrücke übernommen.

Als weiter vorteilhaft hat es sich gezeigt, wenn die jeweiligen oberen Lagerungen der Abdeckelemente, insbesondere der Lamellen, in das Adapterelement integriert sind. Hierdurch ergibt sich eine besonders Bauraum sparende Integration der Abdeckeinrichtung in das Adapterelement, welches demzufolge eine entsprechende Mehrfachfunktion hat. Dabei ergibt sich eine besonders einfache Verstellungsmöglichkeit, indem die jeweiligen oberen Lagerungen der Abdeckelemente, insbesondere der Lamellen, als Drehlager ausgebildet sind.

Weiterhin hat es sich als vorteilhaft erwiesen, wenn die jeweiligen unteren Lagerungen der Abdeckelemente, insbesondere der Lamellen, in das Stützelement integriert sind. Dies ermöglicht ebenfalls eine Bauraum sparende Anordnung der Abdeckeinrichtung, wobei das Stützelement eine Mehrfachfunktion hat. In diesem Zusammenhang ergibt sich ebenfalls eine besonders einfache und betriebssichere Verstellbarkeit der Abdeckeinrichtung, wenn die jeweiligen unteren Lagerungen der Abdeckelemente, insbesondere der Lamellen, als Drehlager ausgebildet sind.

Als besonders vorteilhaft hat es sich ferner gezeigt, wenn das Adapterelement zumindest in einem Teilbereich als Hybridbauteil ausgebildet ist, welches einen metallischen Werkstoff aufweist, der mittels eines Kunststoffes zu dem Hybridbauteil ergänzt ist. Hierdurch können Eigenschaften des Adapterelements besonders bedarfsgerecht eingestellt werden, so dass das Adapterelement beispielsweise mit einer hinreichenden Steifigkeit ausgestaltet werden kann bei gleichzeitiger Realisierung eines geringen Gewichts des Adapterelements.

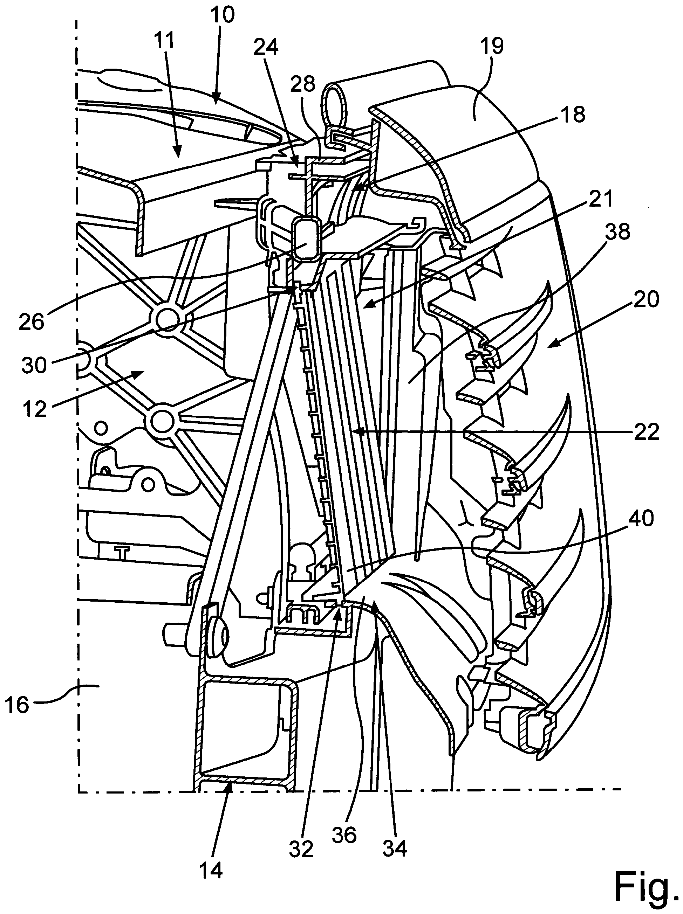

Weitere Vorteile und Einzelheiten der Erfindung ergeben sich aus der nachfolgenden Beschreibung eines bevorzugten Ausführungsbeispiels sowie anhand der Zeichnung.

Die einzige Figur zeigt in einer perspektivischen und geschnittenen Seitenansicht einen Kraftwagenbug eines Personenkraftwagens, welcher mit einem Frontmodul 10 versehen ist, welches üblicherweise unabhängig von der Karosserie des Personenkraftwagens hergestellt und im Rahmen der Endmontage an der Karosserie des Kraftwagens montiert wird. Hierzu umfasst das Frontmodul 10 eine Frontmodulstruktur 12 sowie einen Biegequerträger 14, welcher sich in Einbaulage des Frontmoduls 10 zumindest im Wesentlichen in Fahrzeugquerrichtung erstreckt. Der einen Teil einer Stoßfängeranordnung bildende Biegequerträger 14 der Frontmodulstruktur 12 ist dabei unter Vermittlung eines jeweiligen, auch als Crashbox bezeichneten Energieabsorptionselementes 16 an dem jeweils zugehörigen, in Fahrzeuglängsrichtung dahinter verlaufenden Hauptlängsträger abgestützt.

Die Frontmodulstruktur 12 weist außerdem einen Oberbau 11 mit einer Kühlerbrücke auf, über welche jeweilige Längsträger einer oberen Längsträgerebene auf Höhe jeweiliger Kotflügelbänke miteinander verbunden sind. Der Oberbau 11 erstreckt sich dabei nach unten bis zum Biegequerträger 14.

Weiterhin umfasst das Frontmodul 10 in seinem oberen Bereich ein Adapterelement 18, welches auch als Frontmoduladapter 18 bezeichnet wird. Unter Vermittlung dieses Adapterelements 18 ist ein Verkleidungsteil 19 des Frontmoduls 10 an der dahinter angeordneten Frontmodulstruktur 12 befestigt und abgestützt. Im vorliegenden Ausführungsbeispiel handelt es sich bei dem Verkleidungsteil 19 um eine Stoßfängerverkleidung aus einem Kunststoff, durch welche ein Stoßfänger zumindest bereichsweise in Fahrzeuglängsrichtung nach vorne hin verkleidet ist und innerhalb welcher ein Kühlergrill 20 integriert ist, welcher auch als Kühlermaske bezeichnet wird.

Das Adapterelement 18 ist vorliegend durch ein zugeordnetes Stützelement 34 nach unten hin abgestützt, welches zumindest im Wesentlichen U-förmig ausgebildet ist mit einem in Fahrzeugquerrichtung verlaufenden unteren Schenkel 36 und jeweiligen seitlichen Schenkeln 38. Mit dem unteren Schenkel 36 ist das Stützelement 34, welches vorzugsweise einteilig aus einem Kunststoffmaterial hergestellt ist, oberseitig des Biegequerträgers 14 an diesem abgestützt. Das Adapterelement 18 ist über die seitlichen Schenkel 38 somit nach unten hin auch am Biegequerträger 14 abgestützt.

Durch das Adapterelement 18 und das Stützelement 34 ist vorliegend eine im Wesentlichen rechteckförmige Kühlöffnung 21 begrenzt, die nach vorne hin durch den Kühlergrill 20 überdeckt ist. Über diese Kühlöffnung 21 gelangt eine durch den Fahrtwind erzeugte Kühlluftströmung zu einer dahinter angeordneten, vorliegend jedoch nicht erkennbaren Kühleinrichtung des Personenkraftwagens und durchströmt diese. Die Kühleinrichtung, welche auch als Kühlmodul bezeichnet wird, umfasst wenigstens einen Wärmetauscher, über welchen beispielsweise Kühlwasser für ein Antriebsaggregat, insbesondere eine Verbrennungskraftmaschine, gekühlt werden kann. Alternativ oder zusätzlich können auch andere Wärmetauscher beziehungsweise Kühler, beispielsweise für Öl, vorgesehen sein. Die Kühleinrichtung kann dabei Teil des Frontmoduls 10 oder aber karosserieseitig angeordnet sein.

Wie nun aus der Figur erkennbar ist, umfasst das Frontmodul 10 auch eine Abdeckeinrichtung 22, welche auch als Jalousie bezeichnet wird. Die Abdeckeinrichtung 22 ist - in Fahrzeuglängsrichtung und bei in Vorwärtsfahrtrichtung des Kraftwagens gesehen - vor der Kühleinrichtung beziehungsweise dem Kühlmodul angeordnet und vorliegend zwischen einer Schließstellung und wenigstens einer Offenstellung verstellbar. In der Schließstellung ist zumindest ein Teilbereich der Kühlöffnung 21 verschlossen, so dass bei einer Vorwärtsfahrt des Personenkraftwagens über diesen Teilbereich der Kühlöffnung 21 kein Kühlluftstrom zur Kühleinrichtung gelangen kann. Der Personenkraftwagen weist durch dieses Verschließen der Kühlöffnung 21 jedoch eine vorteilhafte Aerodynamik auf, so dass er besonders energieeffizient beziehungsweise Kraftstoff sparend angetrieben werden kann. In der Offenstellung gibt die Abdeckeinrichtung 22 zumindest den Teilbereich der Kühlöffnung 21 frei, so dass bei einer Vorwärtsfahrt des Personenkraftwagens über diesen Teilbereich der Kühlöffnung 21 ein Kühlluftstrom zur Kühleinrichtung gelangen und diese zur Kühlung von dessen Arbeitsmedium durchströmen kann.

Die Abdeckeinrichtung 22 umfasst vorliegend eine Mehrzahl von parallel zueinander angeordneten und in Fahrzeughochrichtung verlaufenden Abdeckelementen in Form von Lamellen 40, welche an entgegengesetzten oberen beziehungsweise unteren Seiten an entsprechenden Führungen beziehungsweise Lagerungen 30, 32 gelagert sind. Diese Lagerungen werden vorliegend durch Dreh- oder Schwenklager gebildet. Die oberen Lagerungen 30 der Lamellen 40 sind dabei in das Adapterelement 18 integriert, die unteren Lagerungen 32 sind am beziehungsweise im Stützelement 34 gehalten und über dieses am Biegequerträger 12 abgestützt. Anstelle der Dreh- oder Schwenklagerungen sind natürlich auch andere Lagerungen beziehungsweise Führungen der Abdeckelemente 40 denkbar.

Die Integration der Abdeckeinrichtung 22 in das Adapterelement 18 bedeutet in diesem Fall, dass das Adapterelement 18 die Funktionen der Lagerung der jeweiligen Lamellen 40 an deren oberen, jeweiligen Dreh-/Schwenklager übernimmt. Natürlich können auch andere Funktionen der Abdeckeinrichtung 22 in das Adapterelement 18 integriert sein, beispielsweise eine Führung der Lamellen 40 oder eine Verstelleinrichtung, mit der die Lamellen 40 zwischen der Schließstellung und der Offenstellung verlagerbar sind. Mit anderen Worten kommt dem Adapterelement 18 vorliegend eine Doppelfunktion zu, nämlich zum einen, das Verkleidungsteil 19 zu haltern und zum anderen Funktionen der Abdeckeinrichtung 22 zu übernehmen.

Die Integration der Abdeckeinrichtung 22 in das Adapterelement 18 hat dabei den Vorteil, dass sich die beiden Einrichtungen zumindest bereichsweise den zur Verfügung stehenden Bauraum teilen, so dass ein besonders vorteilhaftes Unfallverhalten und insbesondere ein besonders vorteilhafter Fußgängerschutz erzielt werden kann. Da die Abdeckeinrichtung 22 und das Adapterelement 18 den zur Verfügung stehenden Bauraum teilen, verbleibt vor diesen ein hinreichend großer, freier Deformationsraum, der bei einer Kollision des Personenkraftwagens mit einem Fußgänger zur Deformation zur Verfügung steht. Insbesondere hat dabei das Verkleidungsteil 19 einen großen Deformationsraum, in welchen es bei einer unfallbedingten Kraftbeaufschlagung ausweichen kann. Bei einem Beinanprall kann der Fußgänger somit besonders effektiv geschützt werden.

Um einen besonders großen Deformationsraum zu schaffen, verläuft die Abdeckeinrichtung 22 schräg zur Fahrzeuglängsrichtung und dabei in Fahrzeuglängsrichtung von vorne unten nach hinten oben.

In der Figur ist ein Querträgerbereich 24 des Adapterelements 18 erkennbar, welcher als Aluminium-Kunststoff-Hybridbauteil ausgebildet ist. Hierzu weist der Querträgerbereich 24 ein Querelement 26 aus Aluminium auf, das mit einem Kunststoff 28 versehen und dadurch zu dem Aluminium-Kunststoff-Hybridbauteil ergänzt ist. Dies erfolgt beispielsweise in einem Spritzgießverfahren.

Die obere Lagerung 30 der Lamellen 40 ist vorliegend an dem Querträgerbereich 24 angespritzt, das heißt, durch den Kunststoff 28 gebildet. Alternativ dazu ist es denkbar, dass die obere Lagerung 30 der Lamellen 40 durch ein separates Bauteil gebildet ist, welches mit dem Querträgerbereich 24 beispielsweise verrastet ist. Ferner ist es möglich, dass die obere Lagerung 30 der Lamellen 40 als separates Bauteil ausgebildet ist, das mit dem Querträgerbereich 24 verschraubt und/oder auf andere Weise gefügt ist.

## Patentansprüche

1. Frontmodul (10) für einen Personenkraftwagen, mit einem Adapterelement (18), unter dessen Vermittlung ein Verkleidungsteil (19) des Frontmoduls (10) an einer dahinter angeordneten Frontmodulstruktur (12) abgestützt ist, wobei das Adapterelement (18) durch ein zugeordnetes Stützelement (34) nach unten hin abgestützt ist,
**dadurch gekennzeichnet, dass**
das Stützelement (34) U-förmig ausgebildet ist mit einem in Fahrzeugquerrichtung verlaufenden unteren Schenkel (36) und jeweiligen seitlichen Schenkeln (38), wobei das Stützelement (34) mit dem unteren Schenkel (36) oberseitig des Biegequerträgers (14) einer Stoßfängeranordnung an diesem abgestützt ist und wobei das Adapterelement (18) über die seitlichen Schenkel (38) somit nach unten hin auch am Biegequerträger (14) abgestützt ist, und dass in das Adapterelement (18) eine verstellbare Abdeckeinrichtung (22) einer Kühlöffnung (21) einer Kühleinrichtung des Personenkraftwagens integriert ist.

2. Frontmodul (10) nach Anspruch 1,
**dadurch gekennzeichnet, dass**
durch das Adapterelement (18) und das Stützelement (34) eine rechteckförmige Kühlöffnung (31) begrenzt ist, welche nach vorne hin durch einen Kühlergrill (20) abgedeckt ist.

3. Frontmodul nach einem der Ansprüche 1 und 2,
**dadurch gekennzeichnet, dass**
die Abdeckeinrichtung (22) schräg zur Fahrzeughochrichtung verläuft.

4. Frontmodul (10) nach einem der vorhergehenden Ansprüche,
**dadurch gekennzeichnet, dass**
die Abdeckeinrichtung (22) eine Mehrzahl von parallel zueinander verlaufenden Abdeckelementen aufweist, welche an entgegengesetzten Seiten an entsprechenden Lagerungen (30, 32) gelagert sind.

5. Frontmodul (10) nach Anspruch 4,
**dadurch gekennzeichnet, dass**
die jeweiligen oberen Lagerungen (30) der Abdeckelemente in das Adapterelement (18) integriert sind.

6. Frontmodul (10) nach Anspruch 4 oder 5,
**dadurch gekennzeichnet, dass**
die jeweiligen oberen Lagerungen (30) der Abdeckelemente als Drehlager ausgebildet sind.

7. Frontmodul (10) nach einem der Ansprüche 4 bis 6,
**dadurch gekennzeichnet, dass**
jeweilige untere Lagerungen (32) der Abdeckelemente in das Stützelement (34) integriert sind.

8. Frontmodul (10) nach Anspruch 7,
**dadurch gekennzeichnet, dass**
die jeweiligen unteren Lagerungen (33) der Abdeckelemente als Drehlager ausgebildet sind.

9. Frontmodul (10) nach einem der vorhergehenden Ansprüche,
**dadurch gekennzeichnet, dass**
das Adapterelement (18) zumindest in einem Teilbereich (24) als Hybridbauteil ausgebildet ist, welches einen metallischen Werkstoff aufweist, der mittels eines Kunststoffes (28) zu dem Hybridbauteil ergänzt ist.

## Claims

1. Front module (10) for a passenger car, with an adapter element (18), whereby a trim part (19) of the front module (10) is supported on a front module structure (12) located behind, wherein the adapter element (18) is supported towards the bottom by an associated supporting element (34),
**characterised in that**
the supporting element (34) is U-shaped in design, having a lower leg (36) extending in the transverse direction of the vehicle and respective lateral legs (38), wherein the supporting element (34) is supported with the lower leg (36) on the top of the bending crossmember (14) of a bumper assembly, and wherein the adapter element (18) is thus also supported towards the bottom on the bending crossmember (14) by way of the lateral legs (38), and **in that** an adjustable covering device (22) of a cooling opening (21) of a cooling device of the passenger car is integrated into the adapter element (18).

2. Front module (10) according to claim 1,
**characterised in that**
the adapter element (18) and the supporting element (34) bound a rectangular cooling opening (31), which is covered towards the front by a radiator grille (20).

3. Front module (10) according to claim 1 or 2,
**characterised in that**
the covering device (22) extends at an angle to the vertical direction of the vehicle.

4. Front module (10) according to any of the preceding claims,
**characterised in that**
the covering device (22) has a plurality of covering elements which extend parallel to one another and are mounted on opposite sides on corresponding mountings (30, 32).

5. Front module (10) according to claim 4,
**characterised in that**
the respective upper mountings (30) of the covering elements are integrated into the adapter element (18).

6. Front module (10) according to claim 4 or 5,
**characterised in that**
the respective upper mountings (30) of the covering elements are designed as pivot bearings.

7. Front module (10) according to any of claims 4 to 6,
**characterised in that**
the respective lower mountings (32) of the covering elements are integrated into the supporting element (34).

8. Front module (10) according to claim 7,
**characterised in that**
the respective lower mountings (32) of the covering elements are designed as pivot bearings.

9. Front module (10) according to any of the preceding claims,
**characterised in that**
the adapter element (18) is in at least a sub-region designed as a hybrid component having a metallic material supplemented by a plastic material (28) to form the hybrid component.

## Revendications

1. Module avant (10) pour un véhicule à moteur, comprenant un élément adaptateur (18), permet à une partie d'habillage (19) du module avant (10) de s'appuyer sur une structure de module avant caché (12), l'élément adaptateur (18) s'appuyant par un élément de support associé (34) vers le bas,
**caractérisé en ce que** l'élément de support (34) est en forme de U comprenant un épaulement inférieur (36) et des épaulements latéraux respectifs (38) s'étendant dans la direction transversale du véhicule, l'élément de support (34) avec l'épaulement inférieur (36) au-dessus du longeron cintré (14) d'un système de pare-chocs étant appuyé sur ce dernier et
l'élément adaptateur (18) étant appuyé sur des épaulements latéraux (38) par conséquent vers le bas également sur le longeron cintré (14), et **en ce que** dans l'élément adaptateur (18) est intégré un dispositif de recouvrement réglable (22) d'une ouverture de refroidissement (21) d'un dispositif de radiateur du véhicule à moteur.

2. Module avant (10) selon la revendication 1, **caractérisé en ce que** l'élément adaptateur (18) et l'élément de support (34) permettent de limiter une ouverture de refroidissement rectangulaire (31) qui est recouverte vers l'avant par une calandre de radiateur (20).

3. Module avant selon l'une quelconque des revendications 1 et 2, **caractérisé en ce que** le dispositif de recouvrement (22) s'étend diagonalement à la verticale du véhicule à moteur.

4. Module avant selon l'une quelconque des revendications précédentes, **caractérisé en ce que** le dispositif de recouvrement (22) présente une pluralité d'éléments de recouvrement parallèles les uns aux autres, qui sont montés sur des côtés opposées sur des paliers correspondants (30, 32).

5. Module avant (10) selon la revendication 4, **caractérisé en ce que** les paliers supérieurs respectifs (30) des éléments de recouvrement sont intégrés dans l'élément adaptateur (18).

6. Module avant (10) selon la revendication 4 ou la revendication 5, **caractérisé en ce que** les paliers supérieurs respectifs (30) des éléments d'adaptateur sont conçus comme un palier rotatif.

7. Module avant (10) selon l'une des revendications 4 à 6, **caractérisé en ce que** les paliers inférieurs respectifs (32) des éléments de recouvrement sont intégrés dans l'élément de support (34).

8. Module avant (10) selon la revendication 7, **caractérisé en ce que** les paliers inférieurs respectifs (33) des éléments adaptateurs sont conçus sous la forme de palier rotatif.

9. Module avant (10) selon l'une quelconque des revendications précédentes, **caractérisé en ce que** l'élément adaptateur (18) est conçu au moins à certains endroits (24) sous la forme d'un composant hybride qui présente un matériau métallique qui est limité au moyen d'une matière plastique (28) par rapport au composant hybride.
